# EUROPEAN PATENT APPLICATION

(11) **EP 1 850 074 A2**
(43) Date of publication of application: **31.10.2007**
(21) Application number: 06252907.8
(22) Date of filing: 06.06.2006
(51) Int. Cl.: F24F 3/16, F24F 11/00

(54) **A method and apparatus for maintaining air characteristics in an air ventilated facility**

(30) Priority: 28.04.2006 SG 200602893
(71) Applicant: Kyodo-Allied Industries Limited, Singapore 628771 (SG)
(72) Inventor: Tang, Lee Zong Tang, c/o Kyodo-Allied Industries Ltd., 628771 Singapore (SG)
(74) Representative: Finnie, Peter John

(57) **Abstract**

A system for maintaining at least one air characteristic in an air ventilated facility using at least one fan filter unit, the system comprising at least one sensor for sensing the at least one air characteristic, the at least one sensor being exposed to the air ventilated facility; the at least one sensor being operatively connected to a control system that is operatively connected to the at least one fan filter unit; the control system receiving output readings from the at least one sensor and determining if the output reading is within a range and, in response to a negative determination, providing a command to the at least one fan filter unit to adjust the at least one fan filter unit operating speed. A corresponding method and apparatus are also disclosed.

## Description

### Field of the Invention

This invention relates to a method and apparatus for maintaining room characteristics in an air ventilated facility by using a fan filter unit.

### Background of the Invention

It is common for modern production and testing facilities to control particles in the air that circulates within an air ventilated facility in order to ensure the quality of output. An example of such a facility is a clean room. Whether be it wafer dies, compact discs, memory disk drives or food, particle content in the air that circulates within the air ventilated facility needs to be maintained at or below acceptable levels. Also, air needs to be circulated for workers to be able to breathe.

Also, at least one fan filter unit is used to overpressure the air in the air ventilated faciliting to reduce the likelihood of particles entering from outside the air ventilated facility. The air pressure in the air ventilated facility is normally higher than that in the ceiling interspace, and other exterior areas, to reduce the likelihood of dirty air from leaking into the facility. The higher the pressure difference, the lower the possibility of air leakage into the facility.

However, the ability of the fan filter unit to provide overpressure in the facility depends on the amount of air the fan filter units are able to draw from, for example, the ceiling interspace or ducts that connect the fan filter units. Some of the factors affecting this include:-
- actual site condition such as, for example, building beam obstruction;
- weak air supply for a fan filter unit farthest from an air supply; and
- fluctuation in the rate and volume of the air supply.

The inability or failure of a fan filter unit to draw sufficient air will result in a reduction of positive air pressure in at least a part of the facility, and may compromise the cleanliness of the facility.

One way of determining the effect of air pressure fluctuations is by measuring the airflow volume or airflow speed directly below a fan filter unit. Airflow speed x filter surface area = airflow volume. The greater the pressure loss from a fan filter unit due to any one or more of the reasons given above will mean a slower air speed below the fan filter unit.

The known method of ensuring adequate positive air pressure involves the physical and manual process of measuring the pressure in the facility at several different locations, one location at a time, using portable measuring devices. Subsequently there is the time consuming process of using trial and error to adjust the fan speed of the various fan filter units to meet the required pressure. This is often by-passed by operating all fan filter units at maximum speed. This can create an excess overpressure, and is energy inefficient.

Also, there is often a requirement for one location in the facility to be at an air pressure higher than the surrounding space. This may require a high air flow for that location.

Further, there may be a popular requirement for the whole confined space to have a very even airflow at a specific location of the area due to the requirements of, for example, a delicate manufacturing process, because an uneven airflow may cause a lower yield rate. This is important in certain industries such as, for example, the fabrication of computer chips, TFT-LCD, and so forth. This is often by-passed by adjusting the airflow of each fan filter unit in small groups of fan filter units one group at a time. The adjustment of one group will affect the airflow (air pressure) of another group. In the many production plants, it is not uncommon to have thousands of fan filter units in a confined space such as, for example, a clean room where airflow evenness at any location is a must for reliable production. To achieve evenness in airflow it may take weeks by many rounds adjustment using trial and error. There are many other situations which may affect airflow evenness such as, for example, but not limited to, a failure of one or more fan filter units.

### Summary of the Invention

In accordance with a first preferred aspect there is provided a system for maintaining at least one air characteristic in an air ventilated facility using at least one fan filter unit, the system comprising:
(a) at least one sensor for sensing the at least one air characteristic, the at least one sensor being exposed to the air ventilated facility;
(b) the at least one sensor being operatively connected to a control system that is operatively connected to the at least one fan filter unit;
(c) the control system receiving output readings from the at least one sensor and determining if the output reading is within a range and, in response to a negative determination, providing a command to the at least one fan filter unit to adjust the at least one fan filter unit operating speed.

According to a second preferred aspect there is provided a method for maintaining at least one air characteristic in an air ventilated facility using at least one fan filter unit, the method comprising:
(a) using at least one sensor to sense the at least one air characteristic, the at least one sensor being exposed to the air ventilated facility;
(b) the at least one sensor being operatively connected to a control system that is operatively connected to the at least one fan filter unit;
(c) obtaining output readings of an air characteristic from the at least one sensor at the control system;
(d) determining if the output reading is within a range; and
(e) in response to a negative determination, providing a command to the at least one fan filter unit to adjust the at least one fan filter unit operating speed.

According to a third preferred aspect there is provided apparatus for maintaining at least one air characteristic in an air ventilated facility using at least one fan filter unit, the apparatus comprising:
(a) at least one sensor for sensing the at least one air characteristic, the at least one sensor being exposable to the air ventilated facility;
(b) the at least one sensor being for operative connection to a control system that is operatively connectable to the at least one fan filter unit;
(c) the control system being for receiving output readings from the at least one sensor and determining if the output reading is within a range and, in response to a negative determination, providing a command to the at least one fan filter unit to adjust the at least one fan filter unit operating speed.

For all three aspects, the at least one sensor may be for sensing at least one of: air flow rate, air pressure, air temperature, air particle count sensor, and air humidity. The at least one sensor may be locatable in, on, above or underneath a ceiling panel of the air ventilated facility and/or a fan filter unit, on top of the at least one fan filter unit, attached to an exterior casing of the at least one fan filter unit, above the ceiling panel; and may be able to be operatively connected to the control system by one of: wirelessly, by a control cable in common with the at least one fan filter unit, and by a control cable independent of the at least one fan filter unit. There may also be provided an audible alarm able to be operatively connected to the control system. The control system may comprise a plurality of sub-controllers. There may be a plurality of sensors that able to operate independently of each other, and a plurality of fan filter units each being able to be independently commanded by the control system.

For all three aspects there may be a plurality of fan filter units arranged in a plurality of groups. Alternatively, the sensors may operate independently of each other. There may be a plurality of sensors, each sensor being operatively associated with a fan filter unit and/or a group of fan filter units.

The obtaining of the output readings may be by one or more of: polling, reading and receiving.

The adjustment in (e) may be to increase the at least one fan filter unit operating speed if the output reading is below the range, and to decrease the at least one fan filter unit operating speed if the output is above the range. Alternatively, the adjustment in (e) may be to decrease the at least one fan filter unit operating speed if the output is below the range, and to increase the at least one fan filter unit operating speed if the output is above the range. The adjustment may be by a preset factor. A direction of the adjustment may be determined by the air characteristic. The method may further comprise determining if the sensing is to be for all of the at least one fan filter units, or is a local sensing for all the at least one fan filter units servicing a local area or location. In response to a positive determination, there may be included waiting a predetermined time before repeating the method. After the adjustment there may be included waiting before repeating the method.

### Brief Description of the Drawings

Examples of the present invention will now be described in detail with reference to the accompanying drawings, in which:
Figure 1 is a schematic drawings side view of a prior art system;
Figure 2 is a schematic view of a preferred embodiment;
Figure 3 is a flow chart of the operation of a simplified system of a preferred embodiment;
Figure 4 is a flow chart for the operation of a more complex system of a second preferred embodiment with a single variable; and
Figure 5 is a flow chart for a more complex system of another preferred embodiment with two variables.

### Detailed Description

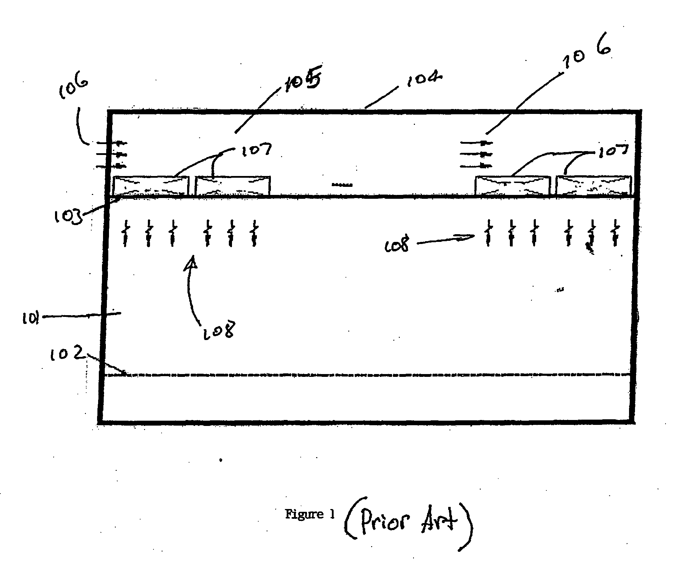

A prior art system is shown in Figure 1. There is a room 101 in a facility, the room 101 having a raised floor 102, a ceiling panel 103 and a roof 104. Between the roof 104 and the ceiling panel 103 is a ceiling interspace 105. Air 106 is supplied to and flows along the interspace 105. The air 106 may be one or more of: atmospheric air, filtered air, clean air, cooled air, heated air, dehumidified air, humidified air, and air-conditioned air. A number of fan filter units 107 are mounted in or to the ceiling panel 103 for drawing air 106 from interspace 105 and passing it to the room 101 to provide a flow of filtered air 108 into room 101. The rate of flow of air 108 creates an overpressure in room 101. It is only by manual measurement, and trial and error manual adjustment of each fan filter unit, that the necessary air flow can be obtained.

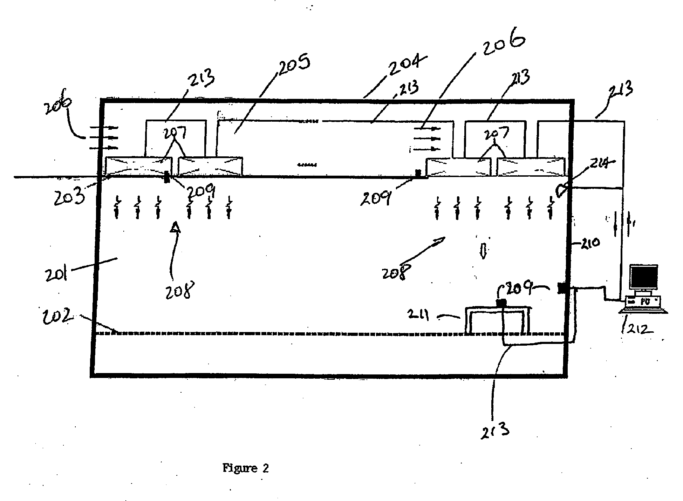

In Figure 2 is shown the same room when fitted and operated in accordance with a preferred embodiment. Like reference numerals are used for like components but the prefix number "1" is changed to "2". Again, there is a room 201 in a facility, the room 201 having a raised floor 202, a ceiling panel 203 and a roof 204. Between the roof 204 and the ceiling panel 203 is a ceiling interspace 205. Air 206 is supplied to and flows along the interspace 205. A number of fan filter units 207 are mounted in or to the ceiling panel 203 for drawing air 206 from interspace 205 and passing it to the rooms 201 to provide a flow of filtered air 208 into room 201. The rate of flow of air 208 creates an overpressure in room 201.

At least one pressure sensor 209 is installed at an appropriate location. This may be within a fan filter unit 207, underneath a fan filter unit 207, on top of a fan filter unit, attached to the exterior casing of a fan filter unit, in the ceiling panel 203, above the ceiling panel 203, on a wall 210, or on a work bench or table 211. All pressure sensors 209 are exposed to the air within, for entering room 201, or actually entering room 201. The locations for the sensors 209 are determined by the condition of room 201, the equipment in room 201 and the requirements of the operator of room 201. They may be, and preferably are, in different locations within room 201. The number of pressure sensors 209 installed within the room 201 will vary, and is determined in part by the sensitivity of the equipment to changes in pressure in the room 201 or by operation requirement. The number of pressure sensors 209 and the number of fan filter units 207 may be different. One sensor 209 may be operatively assigned to a group of fan filter units 207. In such a case, a sensor 209 will be adjacent or within the boundaries of the group of fan filter units 207.

Each pressure sensor 209 is separately connected to a control system 212 wirelessly or by use of cables 213. Cables 213 may be independent of or may be integrated with the fan filter units' 209 control cabling. Multiplexing may be used if required or desired.

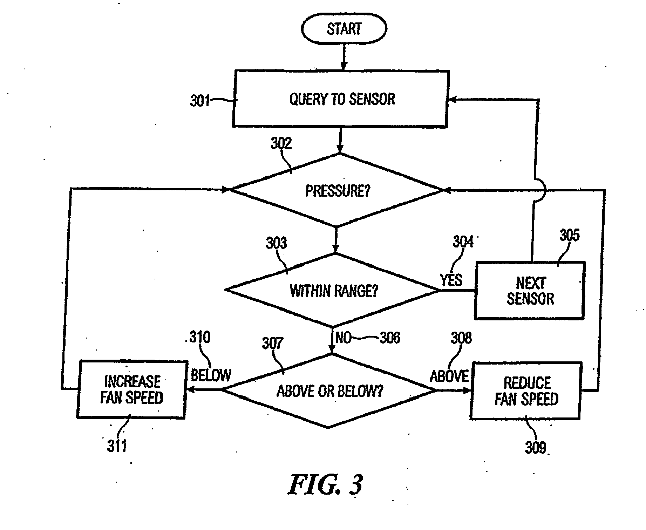

As shown in Figure 3, the control system 212 will sequentially poll or read (301) the value from each pressure sensor 209, or the pressure sensors 209 will report their values to the control system 212, at regular intervals, the values being received by the control system 212.

Upon receiving the pressure (302), the control system 212 determines (303) if the pressure from the sensor 209 is within a user-configurable threshold value or range for each area within the room 201. Those values or ranges are stored in the control system 212. It not within the value or range (306), the control system 212 will determine (307) if the pressure is above or below (310) the range or value and send a command (309, 311) to the fan filter unit(s) within that area to adjust their fan speed to meet the pressure requirement of the room 201. The pressure is then again checked (303). If within the value or range (304), the next sensor is polled (305) and the process continues.

The control system 212 may also send a warning to staff (by email, SMS, or visual and/or audible alarm 214) in the event that the adjustment in the fan speed of the fan fitter units 207 fails to restore the pressure in the room 201. This would be a signal that there are failures in other parts of the ventilation system. The audible alarm 214 may be in the room 201 or in a control room (not shown) in which the control system 212 is located.

The sensors 209 may be or include sensors for air pressure and/or flow rate and/or air temperature and/or air humidity and/or particle count, and/or otherwise as required or desired. In this way the sensors 209 may be for any desired air characteristic in the room 201 - air pressure and/or air flow rate and/or air temperature and/or air humidity and/or air particle count, and so forth. The sensors 209 may operate independently of each other, and each fan filter unit 207 may be able to be individually controlled. Alternatively, sensors 209 and/or fan filter units 209 may be in groups with those within each group operating collectively rather than individually. The sensors 209 for different characteristics may be arranged collectively so that, for example, a temperature sensor and a particle count sensor may be adjacent each other, or even combined.

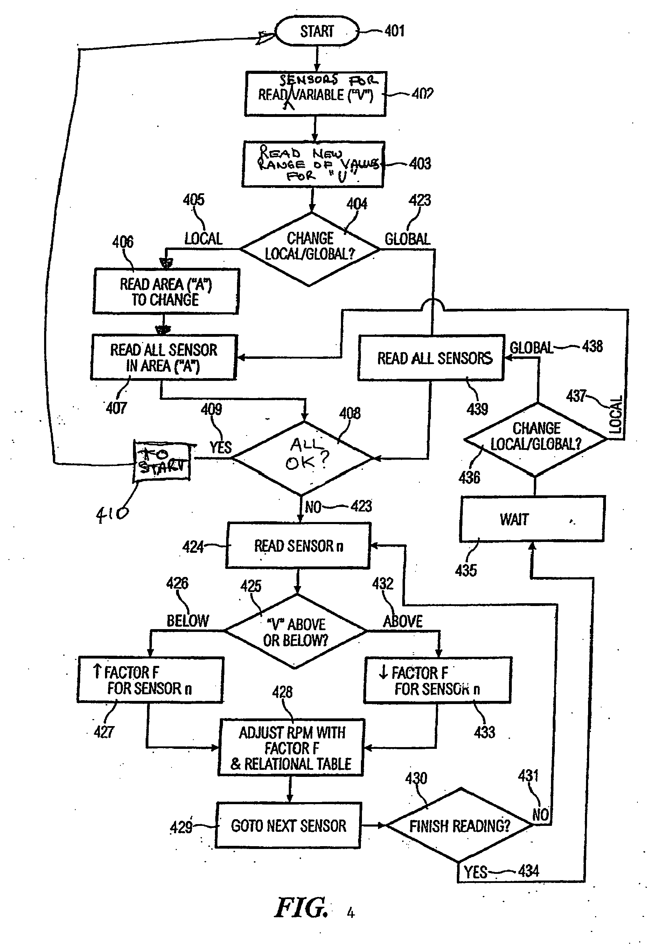

Figure 4 shows a more complex system with sensors 209 for a single variable. After the start (401) the value of the variable of one of the sensors is read (402). If there are new values or a new range of values for the characteristic, the new range of values is also read (403). A determination is then made (404) if the change to be made is to be made locally (405) or globally (423). For example, if the control system 212 has been used to change the temperature setting for the entire room 201, the change would be global. If the change was to change the air flow rate or air pressure at one location only, the change would be local. By local it is meant an individual fan filter unit, or a group of fan filter units, servicing a local area or location.

If the change is to be local (405), the location or area to be changed is read (406) and all sensors 209 in that location or area are then read (407). This may be one sensor 209, or several sensors 209. If the sensors 209 at the location or area are within the required range of values (408, 409) the process reverts back to the start (410). There may be included a delay of, for example, 15 minutes, 30 minutes, 1 hour, 2 hours, or so forth, before restarting. The delay may depend on the characteristic or variable being sensed by sensors 209, the room 201, or other factors required or desired.

If at (404) the result is for a global change (423), all sensors 209 are read (439) and the process reverts to (408).

If at (408) the result is that the reading of one or more sensors 209 are outside the required range of values (423) the values of the sensors 209 concerned are read (424) and a determination made (425) if the value is above (432) or below (426) the required range of values. If below (426) the fan speed is increased by the present factor (427) and the new speed recorded (428). If the value is above (432) the fan speed is decreased by the preset factor (433) and the new speed recorded (428).

The next sensor is 209 is then considered (429) and a determination made (430) if the reading of sensors 209 has finished due to all sensors 209 having been read. If yes (434), after a delay of a preset period (435) a determination is made (436) whether the change is to be global (438) or local (437). If local (437), it reverts to (407). If global, it reverts to (439). The preset period may be of any suitable duration such as, for example, 15 minutes, 30 minutes, 1 hour, 1.5 hours, 2 hours, 3 hours, and so forth.

At (427) and (433), the fan speed adjusted will be the speed of the fan in the fan filter unit or units related to, or linked to, the relevant sensor or sensors 209.

In step (427) and (433), the change in fan speed may be the opposite if the characteristic being measured so requires. For example, in hot climates with strong air conditioning to cool the facility 201, the fan filter unit operating speed may be reduced if the temperature in the facility 201 is below the required range, and increased if it is above. The reverse would apply in cold climates with strong heating.

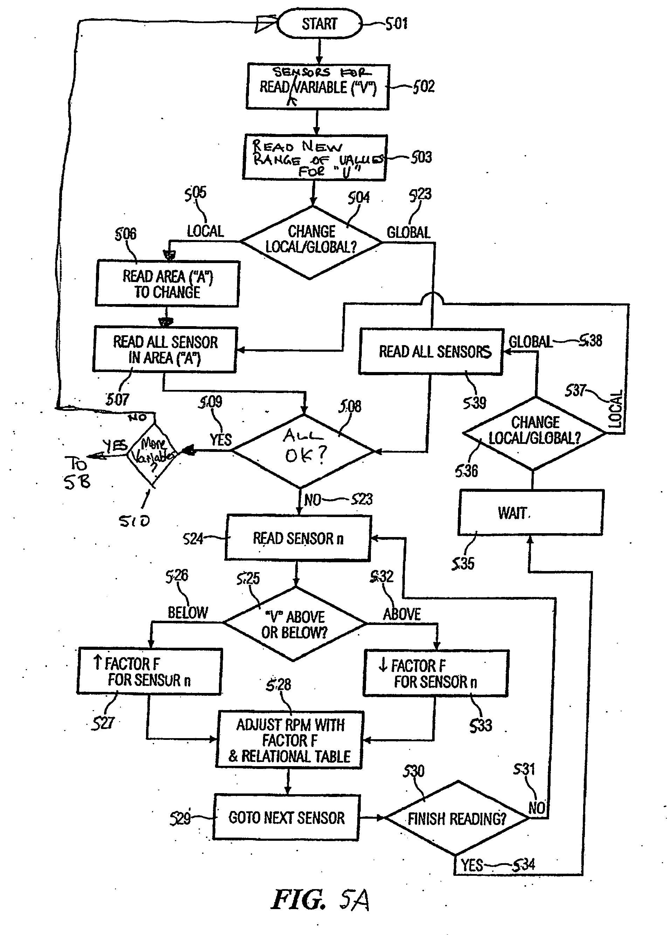

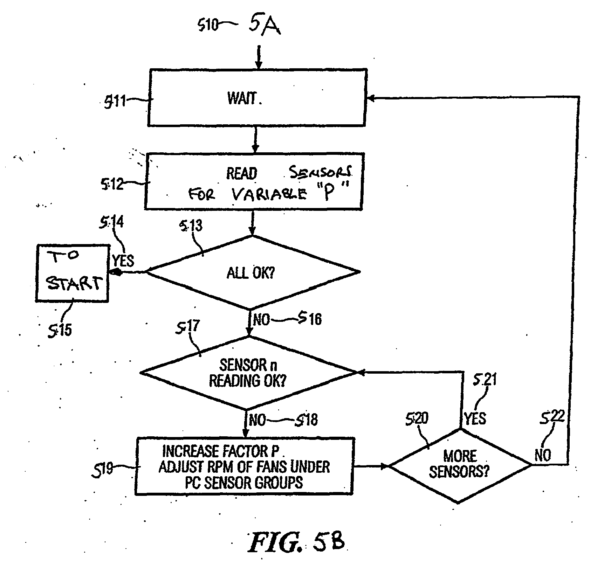

Figure 5 shows in more detail the operation of the processes within the operating system 212 for adjusting the operating speed of the fan filter units when there are sensors 209 for two different variables or characteristics.

After the start (501) the value of the variable of one of the sensors is read (502). If there are new values or a new range of values for the characteristic, the new range of values is also read (503). A determination is then made (504) if the change to be made is to be made locally (505) or globally (523). For example, if the control system 212 has been used to change the temperature setting for the entire room 201, the change would be global. If the change was to change the air flow rate or air pressure at one location only, the change would be local. By local it is meant an individual fan filter unit or a group of fan filter units servicing a local area or location.

If the change is to be local (505), the location or area to be changed is read (506) and all sensors 209 in that location or area are then read (507). This may be one sensor 209, or several sensors 209. If the sensors 209 at the location or area are within the required range of values (508, 509) a query is raised to determine if there are more variables (510). If yes, it passes to the process in Figure 5B. If no, it reverts to the start at (501).

On Figure 5B, after a predetermined time (511) such as, for example: 15 minutes, 30 minutes, 1 hour, 2 hours, or so forth, all sensors 209 in the location or area are read (512). If all are within the required range of values (513, 514) the process reverts back to the start (501).

If at (513) one or more sensors 209 have values outside the required range (516) the reading for each of those sensors 209 is checked (517). If the reading is above or below the range or values (518), the fan speed is adjusted down or up by a preset factor such as, for example, 5%, 10%, 15%, 20% or the like (519), and a determination is made if there are more sensors 209 to be considered (520). If yes (521), the process reverts to (517). If no (522), the process reverts to (511).

If at (504) the result is for a global change (523), all sensors 209 are read (539) and the process reverts to (508).

If at (508) the result is that the reading of one or more sensors 209 are outside the required range of values (523) the values of the sensors 209 concerned are read (524) and a determination made (525) if the value is above (532) or below (526) the required range of values. If below (526) the fan speed is increased by the present factor (527) and the new speed recorded (528). If the value is above (532) the fan speed is decreased by the preset factor (533) and the new speed recorded (528).

The next sensor is 209 is then considered (529) and a determination made (530) if the reading of sensors 209 has finished due to all sensors 209 having been read. If yes (534), after a delay of a preset period (535) a determination is made (536) whether the change is to be global (538) or local (537). If local (537), it reverts to (507). If global, it reverts to (539). The preset period may be of any suitable duration such as, for example, 15 minutes, 30 minutes, 1 hour, 1.5 hours, 2 hours, 3 hours, and so forth.

At (519), (527) and (533), the fan speed adjusted will be the speed of the fan in the fan filter unit or units related to, or linked to, the relevant sensor or sensors 209. Also, at (519), if the sensor 209 is for determining particle count, a figure below the required range of values is not a problem as the required range would start at zero - the perfect result. Therefore, the only negative answer at (517) would be that the particle count was above the required range of values. As such the response at (519) would be to increase the fan speed. However, all other characteristics would have a required range of values.

In step (527) and (533), the change in fan speed may be the opposite if the characteristic being measured so requires. For example, in hot climates with strong air conditioning to cool the facility 201, the fan filter unit operating speed may be reduced if the temperature in the facility 201 is below the required range, and increased if it is above. The reverse would apply in cold climates with strong heating.

It there are three or more characteristics or variables being sensed and controlled, the steps (511) to (515) would be repeated once for each extra variable or characteristic, except that (515) would be replaced by the query (510) the required number of times.

For large network control systems, it is common to have sub-controllers (otherwise known as intelligent routers) for large areas. This divides the network to speed up the polling and command process.

The sub-controllers may be programmed to send commands to the fan filter units under its control to adjust the fan speed without the intervention of the main control system. Alternatively, the sub-controllers may send the data to the main control system and the main control system will determine what speed to set for each individual fan filter unit.

## Claims

1. A system for maintaining at least one air characteristic in an air ventilated facility using at least one fan filter unit, the system comprising:
(a) at least one sensor for sensing the at least one air characteristic, the at least one sensor being exposed to the air ventilated facility;
(b) the at least one sensor being operatively connected to a control system that is operatively connected to the at least one fan filter unit;
(c) the control system receiving output readings from the at least one sensor and determining if the output reading is within a range and, in response to a negative determination, providing a command to the at least one fan filter unit to adjust the at least one fan filter unit operating speed.

2. A system as claimed in claim 1, wherein at least one sensor is for sensing at least one selected from the group consisting of: air flow rate, air pressure, air temperature, air particle count, and air humidity.

3. A system as claimed in claim 1 or claim 2, wherein the at least one sensor is at least one location selected from the group consisting of: in a ceiling panel of the air ventilated facility, in the at least one fan filter unit, underneath the at least one fan filter unit, on top of the at least one fan filter unit, attached to an exterior casing of the at least one fan filter unit, above the ceiling panel, on a wall, on a work bench, and on a work table.

4. A system as claimed in any one of claims 1 to 3, wherein the at least one sensor is operatively connected to the control system by one selected from the group consisting of: wirelessly, by a control cable in common with the at least one fan filter unit, and by a control cable independent of the at least one fan filter unit.

5. A system as claimed in any one of claims 1 to 4 further comprising an audible alarm operatively connected to the control system.

6. A system as claimed in any one of claims 1 to 6 wherein the control system comprises a plurality of sub-controllers.

7. A system as claimed in any one of claims 1 to 6, wherein there is a plurality of sensors that operate independently of each other.

8. A system as claimed in any one of claims 1 to 7, wherein there is a plurality of fan filter units each being independently commanded by the control system.

9. A system as claimed in any one of claims 1 to 7, wherein the there is a plurality of fan filter units arranged in a plurality of groups.

10. A system as claimed in claim 9, wherein there are a plurality of sensors, each sensor being operatively associated with at least one of: a single fan filter unit, and one group of the plurality of groups.

11. Apparatus for maintaining at least one air characteristic in an air ventilated facility using at least one fan filter unit, the apparatus comprising:
(a) at least one sensor for sensing the at least one air characteristic, the at least one sensor being exposable to the air ventilated facility;
(b) the at least one sensor being for operative connection to a control system that is operatively connectable to the at least one fan filter unit;
(c) the control system being for receiving output readings from the at least one sensor and determining if the output reading is within a range and, in response to a negative determination, providing a command to the at least one fan filter unit to adjust the at least one fan filter unit operating speed.

12. Apparatus as claimed in claim 11, wherein at least one sensor is for sensing at least one selected from the group consisting of: air flow rate, air pressure, air temperature, air particle count, and air humidity.

13. Apparatus as claimed in claim 11 or claim 12, wherein the at least one sensor is locatable in at least one location selected from the group consisting of: in a ceiling panel of the air ventilated facility, in the at least one fan filter unit, underneath the at least one fan filter unit, on top of the at least one fan filter unit, attached to an exterior casing of the at least one fan filter unit, above the ceiling panel, on a wall, on a work bench, on a work table.

14. Apparatus as claimed in any one of claims 11 to 13, wherein the at least one sensor is able to be operatively connected to the control system by one selected from the group consisting of: wirelessly, by a control cable in common with the at least one fan filter unit, and by a control cable independent of the at least one fan filter unit.

15. Apparatus as claimed in any one of claims 11 to 14 further comprising an audible alarm in the air ventilated facility able to be operatively connected to the control system.

16. Apparatus as claimed in any one of claims 11 to 15, wherein the control system comprises a plurality of sub-controllers.

17. Apparatus as claimed in any one of claims 11 to 16 wherein there is a plurality of sensors that able to operate independently of each other.

18. Apparatus as claimed in any one of claims 11 to 17, wherein there is a plurality of fan filter units each being able to be independently commanded by the control system.

19. Apparatus as claimed in any one of claims 11 to 17, wherein there is a plurality of fan filter units arranged in a plurality of groups.

20. Apparatus as claimed in claim 19, wherein there is a plurality of sensors, each sensor being operatively associatable with at least one of: a single fan filter unit, and one group of the plurality of groups..

21. A method for maintaining at least one air characteristic in an air ventilated facility using at least one fan filter unit, the method comprising:
(a) using at least one sensor to sense the at least one air characteristic, the at least one sensor being exposed to the air ventilated facility;
(b) the at least one sensor being operatively connected to a control system that is operatively connected to the at least one fan filter unit;
(c) obtaining output readings of an air characteristic from the at least one sensor at the control system;
(d) determining if the output reading is within a range; and
(e) in response to a negative determination, providing a command to the at least one fan filter unit to adjust the at least one fan filter unit operating speed.

22. A method as claimed in claim 21, wherein at least one sensor senses at least one air characteristic selected from the group consisting of: air flow rate, air pressure, air temperature, air particle count, and air humidity.

23. A method as claimed in claim 21 or claim 22, wherein the at least one sensor is located in at least one location selected from the group consisting of: in a ceiling panel of the air ventilated facility, in the at least one fan filter unit, underneath the at least one from filter unit, on top of the at least one fan filter unit, attached to an exterior casing of the at least one fan filter unit, above the ceiling panel, on a wall, on a work bench, and on a work table.

24. A method as claimed in any one of claims 21 to 23, wherein the at least one sensor is operatively connected to the control system by one selected from the group consisting of: wirelessly, by a control cable in common with the at least one fan filter unit, and by a control cable independent of the at least one fan filter unit.

25. A method as claimed in any one of claims 21 to 23 further comprising providing an audible alarm.

26. A method as claimed in any one of claims 21 to 25, wherein the control system comprises a plurality of sub-controllers.

27. A method as claimed in any one of claims 21 to 26, wherein there is a plurality of fan filter units each being independently commanded by the control system.

28. A method as claimed in any one of claims 21 to 26, wherein there is a plurality of fan filter units arranged in a plurality of groups.

29. A method as claimed in any one of claims 21 to 28, wherein there is a plurality of sensors that operate independently of each other.

30. A method as claimed in claim 28, wherein there are a plurality of sensors, each sensor being operatively associated with at least one of: a single fan filter unit, and one group of the plurality of groups.

31. A method as claimed in any one of claims 21 to 30, wherein the obtaining of the output readings is by one or more selected from the group consisting of: polling, reading and receiving.

32. A method as claimed in any one of claims 21 to 31, wherein the adjustment in (e) is to increase the at least fan filter unit operating speed if the output reading is below the range, and to decrease the at least one fan filter unit operating speed if the output is above the range.

33. A method as claimed in any one of claims 21 to 31, wherein the adjustment in (e) is to decrease the at least one fan filter unit operating speed if the output is below the range, and to increase the at least one fan filter unit operating speed if the output is above the range.

34. A method as claimed in claim 32 or claim 33, wherein the adjustment is by a preset factor.

35. A method as claimed in any one of claims 32 to 34, wherein a direction of the adjustment is determined by the air characteristic.

36. A method as claimed in any one of claims 21 to 35 further comprising determining if the sensing is to be for all of the at least one fan filter units in the air ventilated facility, or is a local sensing for those of the at least one fan filter units servicing a local area or location.

37. A method as claimed in any one of claims 21 to 36, wherein in response to a positive determination, there is included waiting a predetermined time before repeating the method.

38. A method as claimed in any one of claims 21 to 37, wherein after the adjustment a preset period passes before repeating the method.
